# FASCICULE DE BREVET EUROPEEN

(11) **EP 0 371 834 B1**
(45) Date de publication et mention de la délivrance du brevet: **29.03.1995**
(21) Numéro de dépôt: 89402982.6
(22) Date de dépôt: 27.10.1989
(51) Int. Cl.: B21D 26/14

(54) **Procédé et dispositif pour le sertissage par magnétoformage de patins sur des têtes de pistons de pompes hydrauliques**
Verfahren und Vorrichtung zum Befestigen von Teilen an Kolbenköpfen hydraulischer Pumpen durch Magnetimpulsformen
Method and device for fastening sliding parts onto piston heads of hydraulic pumps by electromagnetic shaping

(30) Priorité: 29.11.1988 FR 8815598
(43) Date de publication de la demande: 06.06.1990
(73) Titulaire: S.A.M.M.- Société d'Applications des Machines Motrices, F-91570 Bièvres (FR)
(72) Inventeur: Furminieux Gilbert, F-27120 Houlbec-Cocherel (FR)
(74) Mandataire: Martin, Jean-Paul

(56) Documents cités:
- FR-A- 1 435 694
- FR-A- 1 492 589
- US-A- 2 904 874
- US-A- 3 191 264
- MAGNEFORM, THE ELECTROMAGNETIC METALFORMING MACHINE, 1963, General Dynamics,General Atomic Division, San Diego, California, US

## Description

La présente invention a pour objet un dispositif de sertissage par magnétoformage d'un patin sur une tête sphérique de piston pour pompe hydraulique et un procédé de sertissage par magnétoformage utilisant ledit dispositif.

On sait que le magnétoformage ou formage électromagnétique consiste dans son principe, à former des matériaux, sans contact mécanique, par de forces de champs électromagnétiques (voir par exemple FR-A-1492589). A cet effet, on décharge les condensateurs d'un générateur dans les spires d'une bobine entourant une pièce tubulaire à former ou logée à l'intérieur de celle-ci. Cette décharge produit dans la pièce à former, pendant un temps très bref, des courants induits intenses, oscillants et fortement amortis.

Ces courants de Foucault créent avec le champ magnétique produit par le courant parcourant la bobine des forces de répulsion très élevées entre la bobine et la pièce, laquelle est ainsi repoussée et formée au profil voulu.

Les tensions utilisées peuvent se situer entre 3000 et 15000 Volts, les énergies dissipées dans la bobine peuvent atteindre environ 48 K.Joules, leur durée étant de l'ordre de 100 micro-seconde, ce qui correspond à une puissance instantanée pouvant atteindre environ 480 Méga-Watts.

Les "tirs" ainsi effectués peuvent être exécutés soit avec une bobine explosive, qui ne sert qu'une seule fois et est détruite après usage, soit avec une bobine permanente, maintenue en place par un support convenable et qui permet des opérations en série.

L'invention a pour but d'appliquer la technique de magnétoformage au sertissage de patins sur des têtes sphériques de pistons pour pompes hydrauliques. Habituellement jusqu'à présent, le sertissage des patins sur les têtes sphériques de ces pistons a été effectué par contact mécanique, (principalement fluotournage) complété par l'utilisation d'abrasif En effet, les deux pièces doivent être serties avec un jeu et un couple de rotulage les plus réduits possibles, afin de garantir à la pompe un rendement optimum. La tête du piston est au préalable enduite d'un film d'abrasif ou bien ce dernier est injecté avec de l'huile après sertissage.

La difficulté est donc d'obtenir un rotulage de très bonne qualité avec un couple de fonctionnement et un jeu extrêmement faibles, en particulier un jeu axial pratiquement nul. Or, pour sertir le patin à la forme parfaitement sphérique de la tête du piston, le sertissage doit être extrêmement dur, de sorte qu'ensuite il est difficile de recréer le jeu nécessaire. En particulier ce procédé a l'inconvénient de générer dans le patin des défauts de portée sphérique dûs à la technique de repoussage et à la présence de produit d'interposition provoquant des portées trop restreintes, tout en donnant une "sensation" initiale de jeu axial et de rotulage corrects. Mais de ce fait le patin s'use rapidement et il en résulte que la pompe prend très rapidement du jeu (par exemple 1/10 mm de jeu axial) et que son rendement diminue.

L'invention a pour but un dispositif qui utilise le magnétoformage pour sertir les patins sur les têtes sphériques de pistons, afin de bénéficier des avantages de ce procédé sur le sertissage mécanique. Ces avantages sont, notamment, l'absence d'influence des tolérances géométriques "d'interfaces" du patin sur le sertissage, l'absence d'usure d'outillage et de contraintes dans les zones non concernées, l'ultra rapidité ou sertissage (durée brute inférieure à 1ms) permettant la production en série avec des temps très courts, et la création simultanée du jeu de rotulage requis sans opération ultérieure de conformage.

Selon l'invention, le dispositif de sertissage par magnétoformage est conforme à la revendication 1. Un procédé de sertissage par magnétoformage d'un patin sur une tête sphérique d'un piston de pompe hydraulique utilisant le dispositif selon la revendication 1 est défini dans la revendication 5.

Ainsi est obtenu le jeu souhaité par effet thermique différential entre la tête du piston et le patin.

Les moyens de chauffage peuvent être un four ou un système à fluide caloporteur de température régulée, et le dispositif peut en outre comporter un tube de transfert des pistons successifs après chauffage au poste de sertissage, ainsi qu'un vérin d'entraînement des pistons dans le tube et de maintien de l'effort d'assemblage des pistons dans les patins.

D'autres particularités et avantages de l'invention apparaîtront au cours de la description qui va suivre, faite en référence aux dessins annexés qui en illustrent une forme de réalisation à titre d'exemple.

La figure 1 est une vue en élévation longitudinale schématique d'une première forme de réalisation du dispositif de sertissage selon l'invention.

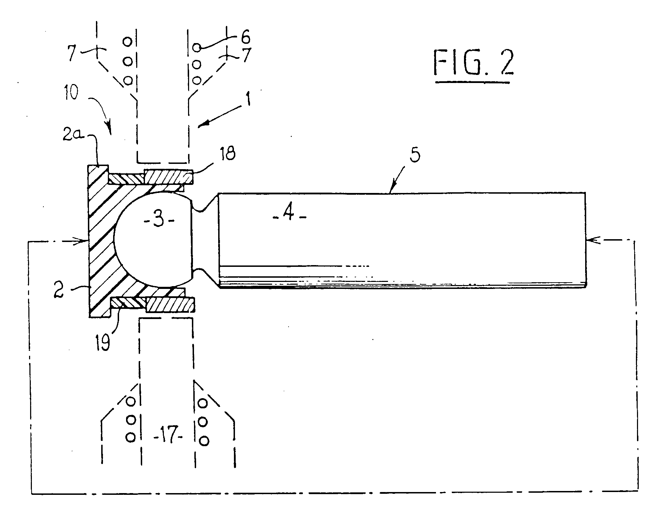

La figure 2 est une vue en élévation simplifiée à échelle agrandie du poste de sertissage du dispositif de la Fig.1.

La figure 3 est une vue analogue à la Fig.1 d'une seconde forme de réalisation du dispositif selon l'invention.

La figure 4 est une vue analogue à la Fig.2 du poste de sertissage du dispositif de la Fig.3.

Les figures 4A et 4B sont des vues de détail de variantes d'exécution de l'ensemble inducteur de la Fig.4.

La figure 5 est une vue mi-coupe transversale, mi-élévation avec arrachement d'un piston de pompe hydraulique sur la tête duquel a été serti un patin conformément à l'invention.

La figure 6 est une vue en coupe axiale d'une pompe hydraulique aux pistons de laquelle l'invention est applicable.

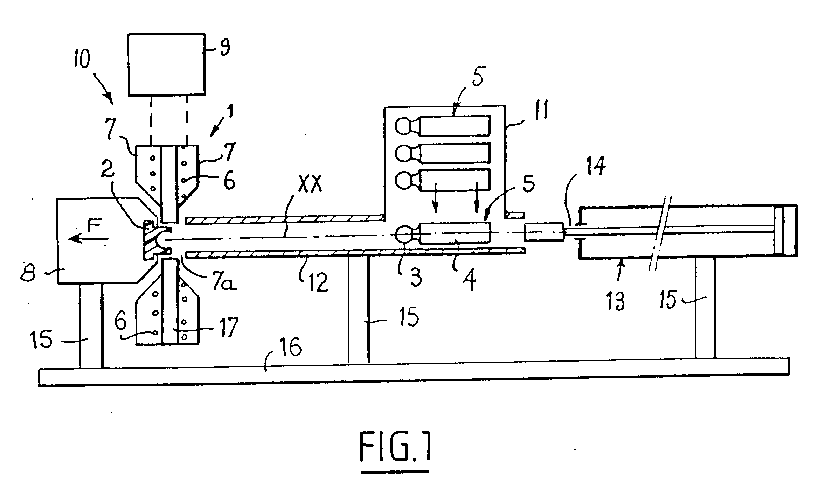

Le dispositif représenté à la Fig.1 comprend un poste 1 de sertissage d'un patin 2 sur la tête sphérique 3 du corps cylindrique 4 d'un piston 5 destiné à une pompe hydraulique telle que celle de la Fig.7.

Le poste 1 comprend un ensemble inducteur 10 qui comporte, d'une part, deux bobines inductrices annulaires 7, d'axe XX reliées en série, pourvues chacun d'un bobinage plan 6 solidement noyé dans une carcasse très rigide, et d'autre part un concentreur de champ 17. Ce dernier est constitué d'une plaque intercalée entre les bobines 7, percé d'une ouverture centrale de passage d'un patin 2, et sur chaque côté de laquelle les deux bobines 7 sont solidement fixées.

Le patin 2 est porté par un support 8, et les bobines 7 sont alimentées par un générateur 9. Ce dernier, le support 8 et le concentreur 17 peuvent être réalisés de manière connue en soi, le concentreur pouvant par exemple être constitué d'un alliage cuivre-béryllium.

Le dispositif comprend également des moyens de chauffage du piston 5 avant son introduction dans le patin 2. Dans l'exemple décrit, ces moyens sont constitués par un four 11 thermostaté de mise en chauffe du piston 5. Ce four 11 est relié au poste de sertissage 1 par un tube 12 de transfert des pistons successifs 5 après chauffage au poste 1. Ces transferts peuvent être assurés par un vérin 13, de préférence pneumatique, dont la tige 14 peut pénétrer dans le four 11 pour acheminer les pistons préchauffés 5 dans le tube 12 jusqu'à ce que leurs têtes sphériques 3 viennent s'introduire à l'intérieur des patins correspondants 2 et s'appliquer avec une poussée d'environ 50 daN pendant la phase sertissage.

L'ensemble inducteur 10, le tube 12 et le vérin 13 sont disposés suivant l'axe général X-X horizontal, le dispositif étant en appui par des montants 15 sur une base 16.

Le support de patins 8 est équipé de moyens d'extraction par l'arrière (suivant la flèche F) des pistons 5 munis de patins 2 sertis. Le support 8 contient un coffret électrique (connu en soi et non représenté) de commande de séquences du générateur 9 et d'alimentation du four 11. Ce coffret contient un indicateur de température et un système de sécurité indiquant que le piston 5 est en place dans le patin 2 et autorisant le "tir" automatique du générateur 9 dans les bobines 7, avec une temporisation par exemple de 0,1 seconde environ.

Le poste de sertissage 1 comprend également une bague 18 appelée "propulseur", en un matériau conducteur électrique très bon tel que le cuivre pur. Cette bague 18 est dimensionnée pour pouvoir enserrer et déborder l'extrémité du patin 2 orientée vers le corps 4 du piston 5, et interposée entre celui-ci et le concentreur de champ 17. De plus, entre le propulseur 18 et un collet périphérique saillant 2a formé à l'extrémité du patin 2, est interposée une bague isolante 19 qui a pour fonction de positionner convenablement le propulseur 18.

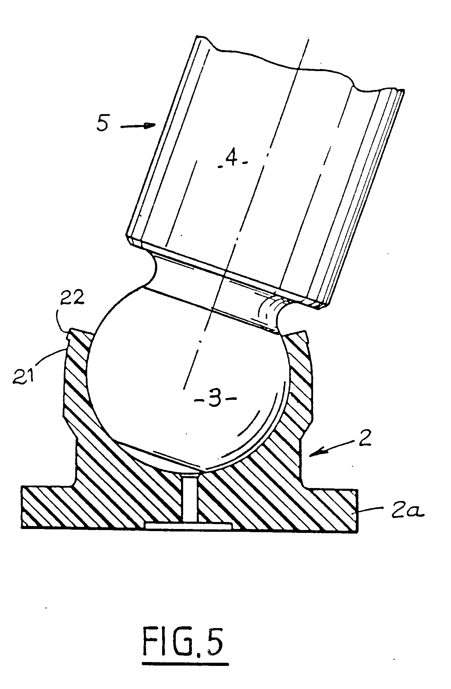

Par ailleurs, afin que lors du "tir" du générateur 9 dans les bobines 7, le propulseur 18 ne risque pas de glisser sur le patin 2, des irrégularités sont ménagées sur la surface extérieure du patin 2 enserrée par le propulseur 18. Ces irrégularités peuvent être de préférence constituées par une encoche annulaire 21 limitée du côté du corps 4 du piston 5 par un ressaut terminal 22 (Fig.5).

La mise en oeuvre du dispositif de sertissage qui vient d'être décrit, est la suivante.

Compte tenu que la tête sphérique 3 est généralement constituée en un acier approprié (par exemple de l'acier 100 C6 traité), la température de cette tête 3 ne doit jamais atteindre 180°C, même superficiellement. Le four 11 est donc réglé en conséquence, et de telle sorte qu'au moment du sertissage, après transfert du piston chauffé 5 par le tube 12, la différence de température entre le piston 2 et la tête 3 soit de l'ordre de 100°C environ (suivant le jeu souhaité).

Incidemment, la contrainte impérative de température indiquée ci-dessus exclut les procédés de chauffage pouvant atteindre cette limite même brièvement, sans contrôle possible, par exemple rayonnement, induction...

De préférence le four 11 assure le chauffage indirect des pistons 5 par fluide caloporteur, dont la température régulée est strictement inférieure à 180°C. Le fluide utilisé est choisi de manière qu'il n'entraîne pas de corrosion des pièces, ces dernières étant en acier non inoxydable.

On met en place tout d'abord le patin avec son support de centrage 8 dans l'inducteur 10 en face de la sortie du tube 12. Ensuite on réalise, au moyen du vérin 13, le transfert d'un piston chaud 5 depuis le four distributeur 11 dans le tube 12 vers le patin 2.

La tête sphérique 3 du piston 5 vient s'appliquer, sans choc, dans la sphère du patin 2 avec une poussée d'environ 50 daN. Le "tir" de sertissage s'effectue alors automatiquement par décharge du générateur 9 dans les bobines 7. La poussée peut être augmentée sans inconvénient, 50daN étant un minimum pour un maintien correct des pièces.

La puissance électrique déchargée dans les bobines 7 est avantageusement supérieure de 50 à 100% environ à la puissance théorique nécessaire au sertissage. On obtient ainsi un sertissage extrêmement enveloppant, en même temps que le jeu très réduit souhaité entre la tête 3 et le patin 2, ce très faible jeu permettant lui-même un très faible couple de rotulage.

Durant la décharge, la partie du patin 2 enserrée par le propulseur 18 vient se sertir étroitement sur la tête sphérique 3, et le propulseur 18 vient épouser l'encoche 21 et le ressaut 22. Après le "tir" et le retrait de l'ensemble serti, le propulseur 18 et la bague 19 sont extraits du patin 2 au moyen d'un outillage approprié non représenté, spécifique à chaque type d'ensemble serti et distinct du dispositif de sertissage.

Après sertissage du patin 2, aucune retouche des surfaces en regard de la tête 3 et du patin serti 2 n'est nécessaire. La zone de sertissage ne présente aucun défaut (tel que crique ou fissure) et le jeu ainsi que le couple de rotulage correspondants extrêmement réduits, sont donc obtenus en une seule opération, sans qu'aucune reprise ultérieure du jeu de rotulage soit nécessaire.

Les jeux axiaux de rotulage obtenus sont pratiquement voisins de 0. A titre d'exemple numérique indicatif, l'énergie envoyée dans les bobines 7 par le générateur 9 peut être de 1,3 K.Joules pour une tête sphérique 3 dont le diamètre est compris entre environ 4,77 et 4,79 mm. Le jeu axial obtenu est inférieur ou égal à 0,01 mm et le couple de rotulage correspondant est inférieur ou égal à 0,003 mN.

Egalement à titre indicatif, des essais ont montré qu'après cent heures d'endurance dans des conditions difficiles sur une pompe PF100, on obtient des jeux axiaux de 10 à 30 microns pour des jeux de 0 à 5 microns après sertissage.

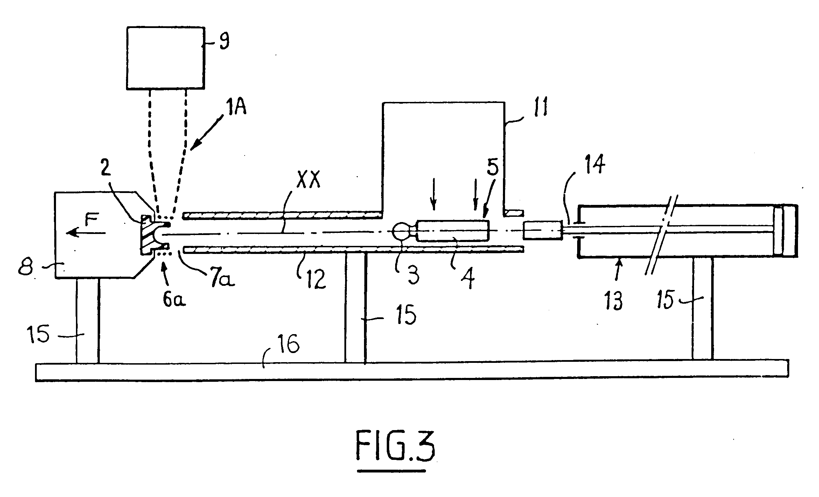

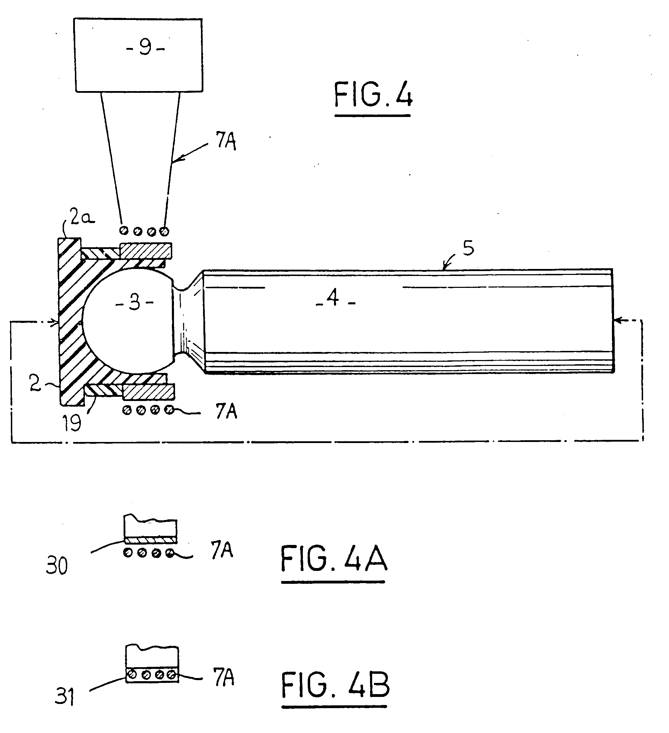

Le dispositif représenté aux Fig.3 et 4 comporte un poste de sertissage 1A dans lequel le sertissage est exécuté avec une bobine 7A dite "perdue" ou explosive. Ces termes sont employés par opposition aux bobines 7 dites "permanentes", grâce à leur construction robuste avec les bobinages 6 noyés dans une solide carcasse, et à l'adjonction du concentreur 17.

Dans ce cas la bobine 7A, alimentée par le générateur 9, n'est plus noyée dans un support, mais simplement constituée d'un enroulement cylindrique de fil de cuivre verni qui ne sert qu'une fois. Elle peut être disposée telle quelle autour du propulseur 18, et est détruite au cours du sertissage.

Afin de faciliter sa fabrication et sa mise en place, l'enroulement de la bobine 7A peut être collé sur un manchon 30 en carton ou plastique (Fig.4A) par exemple, ou bien surmoulé dans une matière plastique 31 (Fig.4B).

Cette variante présente l'avantage d'une construction simple et rapide pour des sertissages en faible quantité, l'inconvénient étant la consommation d'une bobine par sertissage.

La mise en oeuvre du sertissage reste semblable à celle de l'une des réalisations précédentes, en fonction du choix du jeu de rotulage par effet thermique.

Les ensembles sertis font l'objet des contrôles suivants:
1) contrôle unitaire de:
   - couple de rotulage
   - jeu axial,
   - vérification de l'absence de crique par ressuage.
2) prélèvement d'un élément du lot pour coupe axiale de l'ensemble. L'examen de la coupe permet la vérification de la géométrie interne du sertissage et l'absence de résidus entre les surfaces de rotulage.

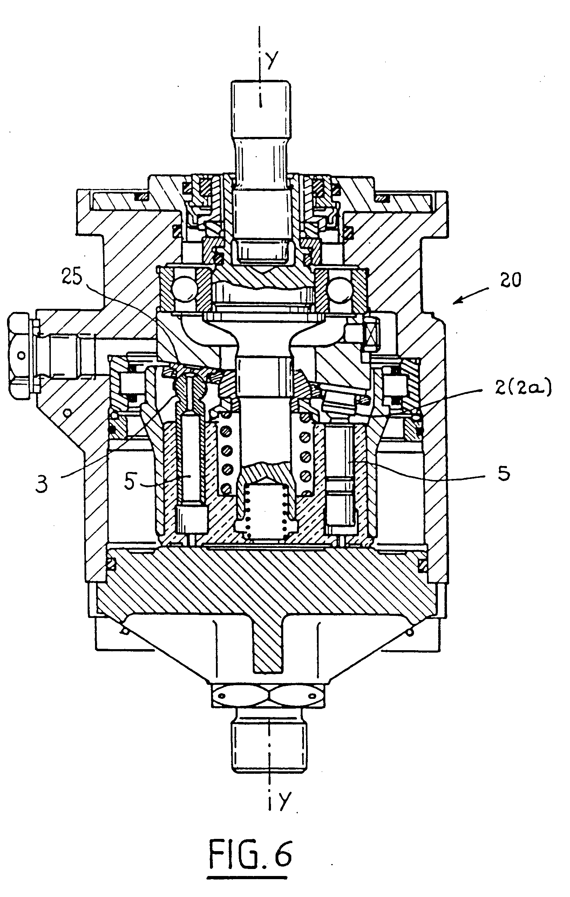

La Fig.6 montre une pompe hydraulique 20 équipée d'une série de pistons 5 disposés coaxialement à son axe général YY et auxquels peut être appliquée l'invention. Cette pompe 20 est d'un type connu en soi et ne sera donc pas décrite en détail. On indiquera seulement que les patins 2, sertis sur les têtes 3 des pistons 5, sont en appui glissant sur une surface 25 inclinée d'un angle approprié sur l'axe YY.

## Revendications

1. Dispositif de sertissage par magnétoformage d'un patin (2) sur une tête sphérique (3) d'un piston (5) de pompe hydraulique, caractérisé en ce qu'il comprend un poste (1) de sertissage pourvu d'un support (8) de patin (2) et d'au moins un bobinage (6, 6A) d'induction magnétique alimenté par un générateur (9), ce poste de sertissage (1) comprenant également un ensemble inducteur (10) à deux bobines inductrices (7) pourvues chacune d'un bobinage (6) et qui sont fixées à un concentreur de champ (17) intercalaire, ce dispositif comprenant également des moyens de chauffage (11) du piston (5) préalablement à son introduction dans le patin (2) et des moyens pour déplacer jusqu'au patin (2) le piston (5) après chauffage de celui-ci.

2. Dispositif selon la revendication 1, caractérisé en ce que les moyens de chauffage sont un four (11) à fluide caloporteur de température régulée, et le dispositif comporte en outre un tube (12) de transfert des pistons successifs (5) après chauffage au poste de sertissage (1), ainsi qu'un vérin (13) d'entraînement des pistons (5) dans le tube (12) et de maintien de l'effort d'assemblage des pistons (5) dans les patins (2).

3. Dispositif selon la revendication 2, caractérisé en ce que le poste de sertissage (1) comprend une bague (18, 18A) en matériau conducteur électrique dit "propulseur", dimensionnée pour pouvoir enserrer l'extrémité du patin (2) orientée vers le corps du piston (5) et interposée entre celui-ci et le bobinage d'induction (6).

4. Dispositif selon la revendication 3, caractérisé en ce qu'une bague isolante (19) de positionnement du propulseur (18, 18A), non conductrice électrique, entoure le patin (2) entre le propulseur (18, 18A) et un collet terminal (2a) du patin (2).

5. Procédé de sertissage par magnétoformage d'un patin (2) sur une tête sphérique (3) d'un piston (5) de pompe hydraulique utilisant un dispositif de sertissage par magnétoformage selon la revendication 1 dans lequel, avant sertissage, on chauffe le piston (5) à une température prédéterminée, puis on introduit sa tête (3) dans le patin (2) et après sertissage, on laisse refroidir la tête (3) du patin (2) afin de créer un jeu de rotulage entre celle-ci et le patin (2), caractérisé en ce que des irrégularités (21, 22) sont ménagées sur la surface extérieure du patin(2) enserrée par le propulseur (18) du dispositif.

## Claims

1. Apparatus for crimping a shoe (2) onto a spherical head (3) of a hydraulic pump piston (5) by magneto-forming, characterised in that it comprises a crimping station (1) provided with a support (8) for the shoe (2) and at least one magnetic induction coil means (6, 6A) supplied by a generator (9), this crimping station (1) also comprising an induction unit (10) with two induction coils (7) each provided with a coil means (6) which are fixed to an intermediate field intensifier (17), this apparatus also having means (11) for heating the piston (5) prior to its insertion in the shoe (2) and means for moving the piston (5) up to the shoe (2) after it has been heated.

2. Apparatus according to claim 1, characterised in that the heating means consist of a temperature-controlled furnace (11) operated with a heat-conducting fluid, and the apparatus further comprises a tube (12) for transferring the successive pistons (5) to the crimping station (1) after heating, and a jack (13) for driving the pistons (5) along the tube (12) and for maintaining the force for assembling the pistons (5) with the shoes (2).

3. Apparatus according to claim 2, characterised in that the crimping station (1) comprises a ring (18, 18A) of an electrically conducting material known as a "propeller", of a size such that it is capable of gripping the end of the shoe (2) oriented towards the body of the piston (5) and interposed between said piston (5) and the induction coil (6).

4. Apparatus according to claim 3, characterised in that an insulating ring (19), which is not electrically conductive, for positioning the propeller (18, 18A) surrounds the shoe (2) between the propeller (18, 18A) and an end flange (2a) of the shoe (2).

5. Method of crimping a shoe (2) onto a spherical head (3) of a hydraulic pump piston (5) by magneto-forming, using a magneto-forming crimping apparatus according to claim 1, wherein, before the crimping, the piston (5) is heated to a predetermined temperature, then its head (3) is inserted in the shoe (2) and, after crimping, the head (3) of the shoe (2) is allowed to cool, so as to create some ball-and-socket play between the head and the shoe (2), characterised in that irregularities (21, 22) are provided on the outer surface of the shoe (2) gripped by the propeller (18) of the apparatus.

## Patentansprüche

1. Vorrichtung zum Befestigen eines Schuhe (2) durch Magnetformung an einem sphärischen Kopf (3) eines Hydraulikpumpen-Kolbens (5), dadurch gekennzeichnet, daß sie eine Befestigungsstation (1) aufweist, die mit einem Träger (8) für den Schuh (2) und wenigstens einer durch einen Generator (9) gespeisten magnetischen Induktionsspulewicklung (6, 6A) versehen ist, wobei die Befestigungsstation (1) auch eine Induktoreinheit (10) mit zwei Induktionsspulen (7) aufweist, die jeweils mit einer Wicklung (6) versehen und an einem eingefügten Feldbündelungsglied (17) befestigt sind, wobei die Vorrichtung außerdem eine Einrichtung (11) zum Erhitzen des Kolbens (5) vor seinem Einführen in den Schuh (2) und eine Einrichtung zum Bewegen des Kolbens (5) nach seiner Erhitzung bis zu dem Schuh (2) aufweist.

2. Vorrichtung nach Anspruch 1, dadurch gekennzeichnet daß die Heizeinrichtung ein Ofen (11) mit temperaturgeregeltem Wärmemedium ist und daß die Vorrichtung außerdem ein Rohr (12) zum Überführen von aufeinanderfolgenden Kolben (5) nach der Erhitzung zu der Befestigungsstation (1) sowie einen Zylinder (13) zum Antrieb der Kolben (5) in dem Rohr (12) und zum Aufrechterhalten der Kraft zum Einpressen der Kolben (5) in die Schuhe (2) aufweist.

3. Vorrichtung nach Anspruch 2, dadurch gekennzeichnet, daß die Befestigungsstation (1) einen als "Treibring" bezeichneten Ring (18, 18A) aus elektrisch leitendem Material aufweist, der so dimensioniert ist, daß er das auf den Körper des Kolbens (5) gerichtete Ende des Schuhe (2) einspannen kann, und der zwischen diesem und der Induktionsspulenwicklung (6) eingefügt ist.

4. Vorrichtung nach Anspruch 3, dadurch **gekennzeichnet**, daß ein elektrisch nichtleitender isolierender Positionierring (19) für den Treibring (18, 18A) den Schuh (2) zwischen dem Treibring (18, 18A) und einem Endbund (2a) des Schuhs (2) umgibt.

5. Verfahren zur Befestigung eines Schuhe (2) durch Magnetformung an einem sphärischen Kopf (3) eines Hydraulikpumpen-Kolbens (5) unter Verwendung einer Magnetformungs-Befestigungsvorrichtung nach Anspruch 1, bei dem man vor der Befestigung den Kolben (5) auf eine vorgegebene Temperatur erhitzt, dann seinen Kopf (3) in den Schuh (2) einführt und nach der Befestigung den Kopf (3) des Schuhs (2) abkühlen läßt, um ein Gelenkspiel zwischen diesem und dem Schuh (2) zu erzeugen, dadurch gekennzeichnet, daß Unregelmäßigkeiten (21, 22) in der äußeren Oberfläche des durch den Treibring (18) der Vorrichtung eingespannten Schuhs (2) ausgebildet werden.
